# EUROPÄISCHE PATENTSCHRIFT

(11) **EP 0 489 357 B1**
(45) Veröffentlichungstag und Bekanntmachung des Hinweises auf die Patenterteilung: **13.04.1994**
(21) Anmeldenummer: 91120388.3
(22) Anmeldetag: 28.11.1991
(51) Int. Cl.: B23D 61/18, F16G 11/08

(54) **Sägewerkzeug**
Saw wire
Scie à fil

(30) Priorität: 03.12.1990 DE 4038479
(43) Veröffentlichungstag der Anmeldung: 10.06.1992
(73) Patentinhaber: MVZ MASCHINENBAU UND VERZAHNUNGSTECHNIK, JOHANNES FALKENSTEIN, D-88427 Bad Schussenried (DE)
(72) Erfinder: Falkenstein, Johannes, W-7953 Bad Schussenried (DE)
(74) Vertreter: Patentanwälte Eisele, Otten & Roth

(56) Entgegenhaltungen:
- DE-A- 3 805 405
- GB-A- 15 752
- US-A- 4 812 096

## Beschreibung

Die Erfindung betrifft ein Sägewerkzeug zur Verwendung an einer Bandsägemaschine o. dgl. nach dem Oberbegriff des Anspruchs 1.

### Stand der Technik:

Ein solches Sägewerkzeug zur Verwendung an einer Bandsägemaschine mit Schneidelementhülsen ist aus der DE-A-38 05 405 bekannt geworden. Bei diesem bekannten Sägewerkzeug ist das Sägeseil zur Bearbeitung von gesteinsartigen Materialien ringförmig als endloses Seil zur Verwendung an einer Bandsägemaschine ausgebildet. Um einen sicheren Verschluß der beiden Seilenden zu erhalten, wird bei diesem bekannten Sägeseil eine Verschlußhülse zunächst auf ein längeres erstes Gewinde vollständig aufgeschraubt und anschließend zurück auf ein zweites, kürzeres Gewinde gedreht. Dabei ist zur Verdrehsicherung zwischen den Seilenden eine formschlüssige Nut- und Federverbindung stirnseitig an den Seilenden vorgesehen.

Der Verschluß dieses bekannten Sägewerkzeugs hat zwar den Vorteil, daß eine außerordentlich sichere Verbindung der Seilenden geschaffen wird. Dies beruht darauf, daß die auf die Seilenden aufgequetschten Gewindehülsen unterschiedlich lange, jedoch gleichdrehende Gewindegänge aufweisen, wobei die separat aufzudrehende Gewindehülse gegen den Endanschlag der aufgequetschten kürzeren Gewindehülse verspannt wird. Hierdurch werden die Seilenden nicht durch ein Gegeneinanderpressen der relativ weichen Seilenden, sondern durch einen Endanschlag der Gewindegänge zusammengehalten. Hierdurch tritt keinerlei Verdrillung eines Seilendes auf, so daß keine Rückstellkräfte auf den Verschluß einwirken.

Bei dem bekannten Sägeseil ist es jedoch von Nachteil, daß die bewegliche Gewindehülse des Verschlusses im zusammengebauten Zustand des Sägeseils die Gewindegänge der aufgequetschten Gewindehülsen an den Seilenden nicht vollständig bedeckt, so daß es aufgrund der umlaufenden und schleifenden Bewegung des Sägewerkzeuges ggf. zu einer Beschädigung dieser freiliegenden Gewindegänge kommen kann.

Weitere bekannte Methoden zur Verbindung von Seilenden von Sägewerkzeugen sind in der DE 38 05 405 A1 angegeben.

### Vorteile der Erfindung:

Das erfindungsgemäße Sägewerkzeug mit den kennzeichnenden Merkmalen des Anspruchs 1 hat gegenüber den bekannten Sägewerkzeugen den Vorteil, daß eine Beschädigung des Verschlusses während des Betriebes des Sägewerkzeugs weitgehend ausgeschlossen ist. Dies beruht darauf, daß die bewegliche Gewindehülse des Verschlusses die Gewinde der beiden feststehenden Gewindehülsen an den Enden des Sägeseils im zusammengebauten Zustand vollständig überdeckt. Um eine sichere und sich nicht selbständig lösende Verbindung der Seilenden zu erreichen, wird die Gewindehülse mittels einer Druckfeder verspannt. Im übrigen sind die vorteilhaften Eigenschaften der bekannten Verschlußeinrichtung des bekannten Sägeseils beibehalten.

In den Unteransprüchen sind vorteilhafte und zweckmäßige Weiterbildungen des erfindungsgemäßen Sägeseils angegeben.

Weitere Einzelheiten und Vorteile der Erfindung sind in der Zeichnung dargestellt und in der nachfolgenden Beschreibung näher erläutert.

Die Figur zeigt eine schematische Darstellung des Sägewerkzeugs mit Verschluß und aufgebrachten Schneidhülsen.

### Beschreibung der Erfindung:

Die vorliegende Erfindung betrifft grundsätzlich ein Sägeseil, wie es in der DE 38 05 405 A1 angegeben ist. Auf den kompletten Inhalt dieser Vorveröffentlichung wird hiermit ausdrücklich Bezug genommen. Ähnliche Sägeseile sind von ihrem Grundaufbau her aus der DE-A 24 51 153 oder auch der GB-A 15 752 bekannt geworden.

Generell erstreckt sich die Erfindung auf die Verwendung des erfindungsgemäßen Sägewerkzeugs an einer nicht näher dargestellten Bandsägemaschine zur Herstellung von Konturen, insbesondere Innenkonturen in Gesteinsmaterialien, wobei das Sägewerkzeug über einen Verschluß zu öffnen ist, damit dieses durch Bohrungen hindurchgeführt werden kann. Hierzu wird auf die DE 38 05 405 A1 verwiesen.

Die spezielle Verschlußmechanik ist anhand der Figur nachfolgend beschrieben.

Das erfindungsgemäße Sägewerkzeug 1 besteht aus einem inneren Drahtseil 2, welches zwei Seilenden 3, 4 aufweist. Die Seilenden 3, 4 werden mittels eines Verschlusses 5 miteinander zur Bildung eines ringförmigen, endlosen Seils verbunden. Dieses Seil kann dann auf die angepaßten Scheiben einer nicht näher dargestellten Bandsägemaschine mit Antriebsrolle und Umlenkrolle aufgelegt werden.

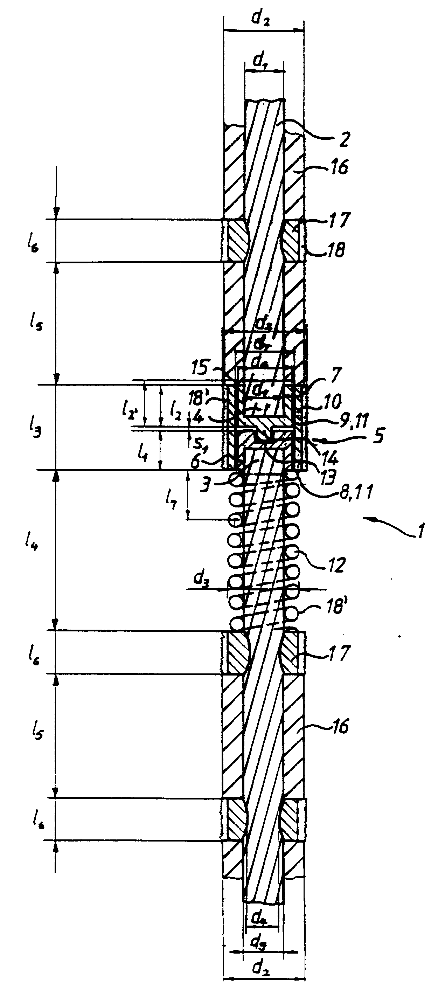

Zur Bildung des Verschlusses 5 weisen die beiden Seilenden 3, 4 je eine Gewindehülse 6, 7 auf, die auf das jeweilige Ende des Drahtseils 2 fest aufgequetscht oder aufgelötet sind. Eine solche Verbindung ist beispielsweise in Fig. 3 der GB-A 15 752 dargestellt.

Die Gewindehülse 6 weist eine Länge l₁, die Gewindehülse 7 eine Länge l₂ auf, wobei l₁ ≅ l₂ ist. Die Gewindehülse 6 weist über ihre gesamte Länge l₁ einen Gewindegang 8, die Gewindehülse 7 über ihre gesamte Länge l₂ einen Gewindegang 9 auf, wobei beide Gewindegänge gleichsinnig drehend ausgebildet sind. Auf die Gewindegänge 8, 9 der feststehenden Gewindehülsen 6, 7 wird die lose Gewindehülse 10 mit ihrem Gewinde 11 aufgeschraubt, welches in der Figur mit den Gewindegängen 8, 9 zusammenfällt. Die Länge l₃ der losen Gewindehülse 10 entspricht der Länge l₁ + l₂ der beiden Gewindegänge 8, 9 der Gewindehülsen 6, 7 zuzüglich eines geringfügigen Abstandsmaßes s₁ zwischen den beiden stirnseitig aneinanderliegenden Drahtseilenden. Dabei kann die Größe von s₁ nahezu den Betrag Null aufweisen, und zwar wenn die beiden Stirnseiten der Seilenden 3, 4 bzw. der Gewindehülsen 6, 7 ohne Spiel aneinanderliegen.

Zur Öffnung des Gewindes wird die äußere, lose Gewindehülse 10 in der Figur durch Drehung nach unten geschraubt, so daß sie von dem oberen Gewindegang 9 der Gewindehülse 7 abgedreht und über ihre ganze Länge auf den unteren Gewindegang 8 der unteren Gewindehülse 6 aufgeschraubt wird. Dieser Vorgang geschieht gegen den Druck einer der Gewindehülse 10 auf dem unteren Seilende 3 nachgeschalteten Druckfeder 12 mit der Länge l₄. Die lose Gewindehülse 10 wird so lange auf den Gewindegang 8 aufgeschraubt, bis sie von dem Gewindegang 9 herunterläuft. Die obere Stirnseite der Gewindehülse 10 fluchtet dann weitgehend mit der Stirnseite des oberen Seilendes 4. Die Druckfeder 12 wird dabei um die Länge l₇ zusammengedrückt, wobei die Länge l₇ ungefähr der Länge l₂ entspricht, da die Gewindehülse 10 um diesen Betrag nach unten gedreht wird. Die Druckfeder 12 muß sich deshalb in ihrer Länge l₄ zumindest um diesen Betrag l₇ zusammendrücken lassen.

Der Zusammenbau des Verschlusses 5 geschieht dann in umgekehrter Reihenfolge. Um eine Verdrillung der Seilenden 3, 4 des Drahtseils 2 zu vermeiden, weisen die Gewindehülsen 6, 7 an ihren Stirnseiten eine Nut-Federverbindung 13, 14 auf, wobei die Nut 13 als diagonal verlaufende Nut in der unteren Gewindehülse 6 und die Feder 14 als diagonal verlaufender Steg in der oberen Gewindehülse 7 stirnseitig angeordnet sind. Hierdurch wird eine formschlüssige Verbindung geschaffen, die ein gegenseitiges Verdrillen der Seilenden vermeidet. Die Feder 14 kann auch als im Querschnitt quadratischer Dorn ausgebildet sein, der in eine entsprechende Ausnehmung der Nut 13 eingreift.

Zum Zusammenfügen der Seilenden 3, 4 wird zunächst die Nut-Federverbindung 13, 14 zusammengefügt und die vollständig auf den unteren Gewindegang 8 aufgeschraubte lose Gewindehülse 10 auf den oberen Gewindegang 9 aufgeschraubt. Der obere Gewindegang 9 kann an seinem Ende einen zusätzlichen Gewindeanschlag 15 aufweisen, der in der Figur gestrichelt eingezeichnet ist und die Gewindehülse 7 auf die Gesamtlänge l₂' verlängert. Der Anschlag der Gewindehülse 10 kann jedoch auch gegen die Kunststoffummantelung 16 erfolgen, die unmittelbar an der Gewindehülse 7 angrenzt und die das innere Drahtseil 2 umgibt. Die Kunststoffummantelung 16 weist eine Länge l₅ auf. Das komplette Sägewerkzeug ist mit derartigen Kunststoffummantelungs-Abschnitten 16 umgeben, die jeweils von einem Schneidelement 17 mit Diamantbeschichtung 18 mit der Länge l₆ unterbrochen sind. Dieser Aufbau ist in an sich bekannter Weise gemäß der DE 38 05 405 A1 ausgebildet. Demzufolge schließt sich an die Druckfeder 12 ebenfalls ein Schneidelement 17 an, gefolgt von einer Kunststoffummantelung 16 und einem nachfolgenden Schneidelement 17 usw.

Die lose Gewindehülse 10 kann ebenfalls eine Diamantbeschichtung 18' aufweisen, wie die Schneidelemente 17.

In der Figur ist der Durchmesser des inneren Drahtseils 2 mit d₁ dargestellt. Um einen möglichst absatzlosen Rundlauf des Sägewerkzeugs zu erzielen, weisen die Kunststoffummantelungen 16, die Schneidelemente 17, die lose Gewindehülse 10 Jeweils den gleichen Außendurchmesser d₂ auf. Der Durchmesser d₃ der Druckfeder 12 ist etwas geringer oder gleich groß ausgeführt wie der Durchmesser d₂. Die Druckfeder kann ebenfalls an ihrer Außenfläche eine Diamantbeschichtung 18' aufweisen. Die Schneidelemente 17 sind fest auf das Drahtseil aufgepreßt, so daß der innere Durchmesser d₄ etwas kleiner ist als der Durchmesser d₁ des normalen Drahtseils. In der Figur ist der Innendurchmesser d₅ der Schneidelemente ohne Diamantbeschichtung 18 dargestellt. Mit Diamantbeschichtung 18 weist der Außendurchmesser des Schneidelements 17 die Größe d₂ auf.

In der Figur ist weiterhin der Innendurchmesser der Gewindehülse 10 mit d₆ und der Außendurchmesser der beiden Gewindehülsen 6, 7 mit d₇ angegeben.

Die Erfindung ist nicht auf das dargestellte und beschriebene Ausführungsbeispiel beschränkt. Sie umfaßt auch vielmehr alle fachmännischen Weiterbildungen und Verbesserungen ohne eigenen erfinderischen Gehalt. Beispielsweise können die Kunststoffummantelungs-Abschnitte 16 durch entsprechende Abschnitte mit Federn ausgebildet sein, wie dies in den Figuren 2 bis 4 der DE 38 05 405 A1 dargestellt ist. Dabei können die Federn selbst die diamantbeschichteten Schneidelemente tragen.

## Patentansprüche

1. Sägewerkzeug zur Verwendung an einer Bandsägemaschine o. dgl., zur Bearbeitung von gesteinsartigen Materialien, bestehend aus einem endlos umlaufenden, auftrennbaren Sägeseil (1), dessen Verschluß (5) durch zwei an den Seilenden (3, 4) des Sägeseils (1) angeordneten, mit dem Seil fest verbundenen Gewindehülsen (6, 7) und einer darauf beweglich angeordneten losen Gewindehülse (10) gebildet ist, wobei an den beiden Seilenden (3, 4) des Sägeseils (1) Mittel (13, 14) zur formschlüssigen und/oder kraftschlüssigen Verdrehsicherung der Seilenden (3, 4) gegeneinander vorgesehen sind, dadurch gekennzeichnet, daß die beiden feststehenden Gewindehülsen (6, 7) auf den beiden Seilenden (3, 4) etwa in der Länge l₁, l₂, l₂' gleich lange Gewindeabschnitte (8, 9) aufweisen, daß die auf diesen feststehenden Gewindehülsen (6, 7) beweglich angeordnete Gewindehülse (10) eine Gesamtlänge l₃ aufweist, die die beiden feststehenden Gewindeabschnitte (8, 9) im zusammengebauten Zustand überdeckt und daß die Gewindehülse (10) zur Verbindung der beiden Seilenden (3, 4) auf eine der feststehenden Gewindehülsen (6) gegen die Kraft einer Druckfeder derart aufschraubbar ist, daß die Stirnseiten der feststehenden Gewindehülsen (6, 7) mit der Verdrehsicherung (13, 14) zusammenfügbar sind.

2. Sägewerkzeug nach Anspruch 1, dadurch gekennzeichnet, daß die Druckfeder (12) eine Gesamtlänge l₄ aufweist, die sich um eine Länge l₇ zusammendrücken läßt, die etwa der halben Länge l_{3/2} der beweglichen Gewindehülse (10) entspricht.

3. Sägewerkzeug nach Anspruch 1 oder 2, dadurch gekennzeichnet, daß die beiden feststehenden Gewindehülsen (6, 7) an ihren Stirnseiten eine ineinandergreifende Nut-Federverbindung (13, 14) als Verdrehsicherung aufweisen, wobei die Nut (13) durch einen diagonalen Querschlitz gebildet ist, in den die Feder (14) als diagonaler Steg einrastet.

4. Sägewerkzeug nach einem oder mehreren der vorhergehenden Ansprüche, dadurch gekennzeichnet, daß die der Gewindehülse (6) mit nachfolgender Druckfeder (12) gegenüberliegende Gewindehülse (7) an ihrem Ende einen Gewindeanschlag aufweist, der durch einen Festanschlag (15) oder einen durch eine Kunststoffummantelung (16) gebildeten Anschlag gebildet wird.

5. Sägewerkzeug nach einem oder mehreren der vorhergehenden Ansprüche, dadurch gekennzeichnet, daß auf dem inneren Drahtseil (2) in einem Abstand l₅ diamantbeschichtete Schneidelemente (17) mit einer Länge l₆ angeordnet sind, die fest oder drehbar am Drahtseil (2) in ihrer Lage fixiert sind.

6. Sägewerkzeug nach Anspruch 5, dadurch gekennzeichnet, daß zwischen den Schneidelementen (17) sowie angrenzend zu einem Ende (4) des Seilverschlusses (5) eine Kunststoffummantelung (16) und/oder weitere Druckfedern vorgesehen sind.

7. Sägewerkzeug nach einem oder mehreren der vorhergehenden Ansprüche, dadurch gekennzeichnet, daß die bewegliche Gewindehülse (10) selbst als Schneidelement mit einer Diamantbeschichtung (18') o. dgl. ausgebildet ist.

8. Sägewerkzeug nach einem oder mehreren der vorhergehenden Ansprüche, dadurch gekennzeichnet, daß der Außendurchmesser der beweglichen Gewindehülse (10) und/oder der Schneidelemente (17) und/oder der Kunststoffummantelung (16) und/oder der Druckfeder (12) etwa gleich groß ist.

## Claims

1. Saw tool for use on a band saw machine or the like, for cutting rock-like materials, consisting of an endlessly revolving, separable saw rope (1), whereof the lock (5) is formed by two threaded sleeves (6, 7) located on the rope ends (3, 4) of the saw rope (1) and securely connected to the rope and by a loose threaded sleeve (10) arranged to move thereon, means (13, 14) being provided on the two rope ends (3, 4) of the saw rope (1) for the positive and/or frictional prevention of rotation of the rope ends (3, 4) with respect to each other, characterised in that the two stationary threaded sleeves (6, 7) on the two rope ends (3, 4) have threaded sections (8, 9) of equal length, namely of the length l₁, l₂, l_{2'}, that the threaded sleeve (10) arranged to move on the stationary threaded sleeves (6, 7) has a total length l₃, which overlaps the two stationary threaded sections (8, 9) in the assembled state and that the threaded sleeve (10) for the connection of the two rope ends (3, 4) can be screwed onto one of the stationary threaded sleeves (6) against the force of a compression spring so that the end faces of the stationary threaded sleeves (6, 7) can be joined together with the means (13, 14) for preventing rotation.

2. Saw tool according to Claim 1, characterised in that the compression spring (12) has a total length l₄, which can be compressed by a length l₇, which corresponds to approximately half the length l_{3/2} of the movable threaded sleeve (10).

3. Saw tool according to Claim 1 or 2, characterised in that on their end faces the two stationary threaded sleeves (6, 7) have an interengaging groove/spring connection (13, 14) as means for preventing rotation, the groove (13) being formed by a diagonal transverse slot, in which the spring (14) engages as a diagonal web.

4. Saw tool according to one or more of the preceding Claims, characterised in that at its end the threaded sleeve (7) located opposite the threaded sleeve (6) with the consecutive compression spring (12) comprises a thread stop, which is formed by a fixed stop (15) or a stop formed by a synthetic material jacket (16).

5. Saw tool according to one or more of the preceding Claims, characterised in that disposed on the inner wire rope (2) at a distance l₅ are diamond-coated cutting members (17) having a length l₆, which are fixed in their position in a stationary or rotatable manner on the wire rope (2).

6. Saw tool according to Claim 5, characterised in that provided between the cutting members (17) and adjoining one end (4) of the rope lock (5) is a synthetic material jacket (16) and/or further compression springs.

7. Saw tool according to one or more of the preceding Claims, characterised in that the movable threaded sleeve (10) itself is constructed as a cutting member with a diamond coating (18') or the like.

8. Saw tool according to one or more of the preceding Claims, characterised in that the outer diameter of the movable threaded sleeve (10) and/or of the cutting members (17) and/or of the synthetic material jacket (16) and/or of the compression spring (12) is approximately the same size.

## Revendications

1. Outil de sciage utilisable dans une scie à ruban ou analogue, pour usiner des matières du type roche, comportant un câble de sciage séparable (1) tournant sans fin, dont la fermeture (5) est formée par deux manchons filetés (6,7) solidaires du câble et agencés aux extrémités (3,4) du câble de sciage (1), et un manchon fileté (10) amovible agencé de façon mobile sur ceux-ci, des moyens (13,14) pour assurer en torsion, de façon mécanique et/ou par adhérence, les extrémités (3,4) du câble étant prévues, de façon opposée l'un à l'autre, aux deux extrémités (3,4) du câble de sciage (1),
caractérisé en ce que les deux manchons filetés fixes (6,7), sur les deux extrémités de câble (3,4), présentent des tronçons filetés (8,9) de longueur sensiblement identique l₁, l₂, l'₂, en ce que le manchon fileté (10) agencé de façon mobile sur ces manchons filetés fixes (6,7) présente une longueur totale l₃ qui recouvre les deux tronçons filetés fixes (8,9) dans l'état monté, et en ce que le manchon fileté (10), pour relier les deux extrémités de câble (3,4), peut être vissé sur un des manchons filetés fixes (6) contre la force d'un ressort de pression, de sorte que les faces frontales des manchons filetés fixes (6,7) avec les moyens de sécurité en torsion (13,14) peuvent être aboutées.

2. Outil de sciage selon la revendication 1,
caractérisé en ce que le ressort de pression (12) présente une longueur totale 1₄ qui peut être comprimée d'une longueur l₇, qui correspond à peu près à la moitié de la longueur l₃/2 du manchon fileté mobile (10).

3. Outil de sciage selon la revendication 1 ou 2,
caractérisé en ce que les deux manchons filetés fixes (6,7) présentent, sur leurs faces frontales, une liaison à languette et rainure (13,14), lesquelles s'engagent l'une dans l'autre, en tant que moyens de sécurité en torsion, la rainure (13) étant formée par une fente transversale diagonale dans laquelle s'engage la languette (14) en tant que nervure diagonale.

4. Outil de sciage selon une ou plusieurs des revendications précédentes,
caractérisé en ce que le manchon fileté (7), opposé au manchon fileté (6) avec le ressort de pression (12) qui suit, présente, à son extrémité, une butée filetée qui est formée par une butée fixe (15) ou une butée formée par une enveloppe de matière synthétique (16).

5. Outil de sciage selon une ou plusieurs des revendications précédentes,
caractérisé en ce que des éléments de coupe (17) revêtus de diamant, ayant une longueur l₆, sont agencés sur le câble interne (2) à un intervalle l₅, éléments de coupe qui sont fixés dans leur position, sur le câble (2), de façon stationnaire ou en pouvant tourner.

6. Outil de sciage selon la revendication 5,
caractérisé en ce que, entre les éléments de coupe (17) ainsi que de façon adjacente à une extrémité (4) de la fermeture (5) du câble, sont prévus une enveloppe de matière synthétique (16) et/ou d'autres ressorts de pression.

7. Outil de sciage selon une ou plusieurs des revendications précédentes,
caractérisé en ce que le manchon fileté mobile (10) est réalisé lui-même en tant qu'élément de coupe comportant un revêtement de diamant (18') ou analogue.

8. Outil de sciage selon une ou plusieurs des revendications précédentes,
caractérisé en ce que les diamètres externes du manchon fileté mobile (10) et/ou des éléments de coupe (17) et/ou de l'enveloppe de matière synthétique (16) et/ou des ressorts de pression (12) sont sensiblement identiques.
